# EUROPÄISCHE PATENTSCHRIFT

(11) **EP 0 814 106 B1**
(45) Veröffentlichungstag und Bekanntmachung des Hinweises auf die Patenterteilung: **15.10.2003**
(21) Anmeldenummer: 97110037.5
(22) Anmeldetag: 19.06.1997
(51) Int. Cl.: C08G 18/48, C08G 18/63, C08L 75/08, C08G 18/40, C08G 18/66, C08G 18/65

(54) **Verwendung von aliphatischen Diolen oder von Polymerdiolen in Polyurethan-Polyetherschaumstoffen zur Verbesserung der Flammkaschierbarkeit dieser Blockschaumstoffe**
Use of aliphatic diols or polymerdiols in polyether-polyurethane foams to improve the flame-backing capacity of these block foams
Utilisation de diols ou de polymerdiols dans les mousses de polyuréthane-polyéther pour améliorer l'aptitude au doublage à la flamme de ces blocs de mousse

(30) Priorität: 21.06.1996 DE 19624876
(43) Veröffentlichungstag der Anmeldung: 29.12.1997
(73) Patentinhaber: BASF AKTIENGESELLSCHAFT, 67056 Ludwigshafen (DE)
(72) Erfinder: Chakrabarti, Sarbananda, 68169 Mannheim (DE); Wagner, Klaus, 67258 Hessheim (DE)
(74) Vertreter: Isenbruck, Günter, Dr.

(56) Entgegenhaltungen:
- EP-A- 0 025 549
- CHEMICAL ABSTRACTS, vol. 114, no. 18, 6.Mai 1991 Columbus, Ohio, US; abstract no. 166154a, XP000193590 & JP 02 286 707 A (ACHILLES CORP.)
- DATABASE WPI Section Ch, Week 9214 Derwent Publications Ltd., London, GB; Class A25, AN 92-111103 XP002058191 & JP 04 055 420 A (DAINIPPON INK & CHEM KK) , 24.Februar 1992

## Beschreibung

Die vorliegende Erfindung betrifft die Verwendung von aliphatischen Diolen oder von Polymerdiolen in Polyurethan-Polyetherblockschaumstoffen zur Verbesserung der Flammkaschierbarkeit der Blockschaumstoffe.

Die Flammkaschierung von Weichschaumstoffen dient im allgemeinen zur Herstellung von Verbundsystemen zwischen Polyurethan (PUR)-Weichschaumstoffen und verschiedenen flächigen Werkstoffen, wie z.B. Textilien, Kunststoff-Folien oder Papieren. Dabei wird der Schaumstoff oberflächlich angeflammt. Dieser Oberflächenbereich bildet dann eine Schmelze, die als Kleberfilm mit den anderen Werkstoffen in Kontakt gebracht wird. Die Schmelze erstarrt im allgemeinen nach wenigen Sekunden oder Minuten, wodurch ein fester Verbund erreicht wird.

Schaumstoffe auf der Basis von Polyesterpolyolen sind im allgemeinen von Natur aus sehr gut flammkaschierbar. Derartige PUR-Esterschaumstoffe sind aber in einer Reihe von Eigenschaften, wie z.B. der Offenporigkeit, ihrer Elastizität und ihrer Widerstandsfähigkeit gegen Feuchtigkeit und Wärme, den bekannten PUR-Etherblockschaumstoffen unterlegen.

PUR-Polyetherblockschaumstoffe weisen gegenüber den Polyesterschaumstoffen eine unbefriedigende Flammkaschierbarkeit auf, da die beim Anflammen der Oberfläche entstehende Schmelze häufig erst nach einiger Zeit erstarrt, und darüber hinaus die Klebkraft des dadurch geschaffenen Verbundes meist sehr viel schwächer ist als bei den Polyesterschaumstoffen.

Um diesen Nachteil zu beseitigen, ist es üblich, PUR-Polyetherblockschaumstoffe unter Zusatz von speziellen Hilfsmitteln herzustellen und somit sowohl die Flammkaschierbarkeit an sich sowie die Haftung zwischen den PUR-Polyetherblockschaumstoffen und den Bezugsstoffen zu verbessern.

So enthält z.B. das von Dow Chemicals vertriebene Produkt Polyurax Polyol U-15.03, das unter dem Handelsnamen Dow HT303 vertrieben wird, ein modifiziertes Polymerpolyol zur Verbesserung der Flammkaschierbarkeit.

In dem von dem Bayer AG vertriebenen Produkt Desmophen PU3175 wurde die Flammkaschierbarkeit des PUR-Weichschaumstoffs durch Zugabe eines modifizierten Polyetherpolyols verbessert.

Die DE-A-42 36 767 schlägt die Zugabe von PUR-Esterschaumstoffen in Pulverform vor, um die Flammkaschierbarkeit von PUR-Polyetherblockschaumstoffen zu erhöhen.

Wie bereits oben dargelegt, verschlechtert die Zugabe von PUR-Esterschaumstoffen u.a. die Widerstandsfähigkeit gegen Feuchtigkeit und Wärme von PUR-Polyetherblockschaumstoffen. Ferner ist zu beachten, daß die relativ hohe Viskosität der PUR-Esterschaumstoffe sich nachteilig auf die Verarbeitungseigenschaften von PUR-Polyetherblockschaumstoffen auswirken kann.

Demgemäß liegt der vorliegenden Erfindung die Aufgabe zugrunde, elastische, flammkaschierbare PUR-Polyetherblockschaumstoffe bereitzustellen, die eine gute Flammkaschierbarkeit aufweisen, deren Haftung nach der Flammkaschierung an den Substraten deutlich verbessert ist und die weiterhin die weitläufig bekannten vorteilhaften Eigenschaften von PUR-Polyetherblockschaumstoffen aufweisen.

Diese Aufgabe wird gelöst durch die Verwendung von Diolen in Polyurethan-Polyetherblockschaumstoffen zur Verbesserung der Flammkaschierbarkeit der Blockschaumstoffe.

im Rahmen des erfindungsgemäßen Verfahrens sind alle PUR-Polyetherblockschaumstoffe, wie sie z.B. in "Kunststoffhandbuch", Band 7 "Polyurethane", insbesondere in Kapitel 5.1, beschrieben sind, anwendbar.

Unter dem hierin verwendeten Begriff "Diol" sind vorzugsweise sowohl aliphatische Diole der allgemeinen Formel (I)

HO―(CH₂)ₙ―OH (I),

wobei n eine ganze Zahl von 2 bis 18, vorzugsweise 2 bis 10 und insbesondere 2 bis 5 sein kann,
sowie Polymerdiole der allgemeinen Formel (II) 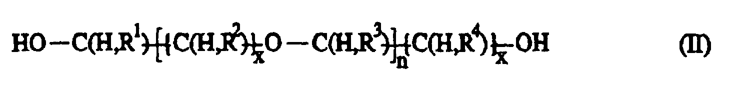 wobei
R¹, R², R³ und R⁴ jeweils unabhängig voneinander Wasserstoff, eine C₁₋₁₀-Alkylgruppe oder eine C₁₋₁₀-Alkoxygruppe sein können,
x eine ganze Zahl von 1 bis 20, vorzugsweise 2 bis 10 und insbesondere 2 bis 5 sein kann, und
n eine ganze Zahl von 1 bis 200, vorzugsweise 10 bis 150 und insbesondere 50 bis 100 sein kann,
zu verstehen.

Der im Rahmen der vorliegenden Anmeldung verwendete Begriff "Molekulargewicht" bezieht sich auf das Zahlenmittel des Molekulargewichts Mₙ.

Beispielhaft zu nennen sind als aliphatische Diole 1,2-Ethandiol, 1,3-Propandiol, 1,4-Butandiol, 1,3-Butandiol, 1,3-, 1,4- und 1,6-Hexandiol und als Polymerdiole Dipropylenglykol, Tripropylenglykol, Tetrapropylenglykol, Polyethylenglykole, deren Molekulargewichte im allgemeinen zwischen 200 und 10.000 liegen, Polypropylenglykole, deren Molekulargewichte zwischen 400 und 4.000 liegen, Polypropylenglykolethoxylate und Polypropylenglykolpropoxylate, deren Molekulargewichte jeweils zwischen 200 bis 10.000 liegen sowie Polyethylenglykolpropoxylate, deren Molekulargewichte ebenfalls zwischen 200 und 10.000 liegen.

Im Rahmen der vorliegenden Erfindung werden besonders bevorzugt Polymerdiole, insbesondere Polypropylenglykolpropoxylate, jeweils mit Molekulargewichten zwischen 300 bis 1.500 eingesetzt, wobei die von der Anmelderin unter dem Handelsnamen Lupranol® vertriebenen Produkte besonders bevorzugt eingesetzt werden.

Dabei ist weiterhin zu beachten, daß bei der Verwendung der insbesondere bevorzugten Polymerdiole auch die physikalischen Eigenschaften, z.B. die Zugfestigkeit, der erhaltenen PUR-Polyetherblockschaumstoffe verbessert wird.

Obwohl der Anteil des zugegebenen Diols nicht besonders beschränkt ist, und je nach gewünschter Härte der PUR-Polyetherblockschaumstoffe frei gewählt werden kann, liegt er im allgemeinen bei 1 bis 10 Gew.-%, vorzugsweise bei 3 bis 6 Gew.-%, jeweils bezogen auf das Gesamtgewicht der Polyol-Komponente.

Ferner betrifft die vorliegende Erfindung auch die unter Verwendung eines elastischen, flammkaschierbaren Polyether-PUR-Blockschaumstoffs, der erhältlich ist durch Zugabe mindestens eines Diols zu dem Blockschaumstoff durch Flammkaschierung und anschließendem Verpressen erhaltenen Verbundstoffe, die die oben beschriebenen PUR-Polyetherblockschaumstoffen und Bezugsmaterialien, wie z.B. Textilien, Papiervliese und Kunststoff-Folien, enthalten, und darüber hinaus auch flammhemmende Zwischenschichten aufweisen bzw. durch Zugabe bestimmter Additive entsprechend ausgerüstet sein können. Eine Übersicht bezüglich spezifischer Anwendungen in der Möbel-, Fahrzeug- und Textilindustrie gibt das "Kunststoffhandbuch", Bd. 7, "Polyurethane", Kap. 5.1.3.1 bis 5.1.3.4.

Ferner betrifft die Erfindung ein Verfahren zur Herstellung eines Verbundstoffs wie oben definiert, wobei der Polyether-Polyurethanblockschaumstoff als Matrix und die darauf aufgebrachte Schicht durch Flammkaschieren flächig verbunden werden.

Die vorliegende Erfindung soll nunmehr anhand von einigen Ausführungsbeispielen näher erläutert werden.

### BEISPIELE

Die folgenden Beispiele wurden unter der Verwendung der folgenden Basisformulierung für PUR-Polyetherblockschaumstoffe durchgeführt:
* Polyetherpolyol (OH-Zahl (OHZ) = 48; Molekulargewicht ungefähr 3.500)
   100 Gewichtsteile
* Polymerpolyol (OHZ = 28; Molekulargewicht ungefähr 5.500)
   10 Gewichtsteile
* Siliconstabilisator
   1,00 Gewichtsteile
* tertiärer Aminkatalysator
   0,35 Gewichtsteile
* Bis(dimethylaminoethylether)
   0,05 Gewichtsteile
* Zinnoctoat
   0,13 Gewichtsteile
* Wasser
   4,50 Gewichtsteile
* Isocyanat T80
   Kennzahl: 105

Die oben genannten Komponenten der Basisformulierung wurden zusammen mit den in Tabelle 1 jeweils aufgelisteten Zuatzmitteln mit einem Rührer (v = 1.000 U/min) gerührt und anschließend in einer offenen Blockform (400 x 400 x 40 bis 45 mm) geschäumt. Die Dichte des Schaumes lag zwischen 22 und 23 kg/m³.

Die Flammkaschierung wurde im Labor manuell wie folgt durchgeführt:
- Brenner:: Flachbrenner (Fischschwanz) 5 cm breit
- Gas:: Propangas
- Abstand zwischen Flamme und Schaum:: 4 cm
- Stoff:: Gewirke/Velours, 7 cm breite Bahn, die auf einer Rolle aufgerollt war.

Die Schaumprobe wurde auf einen feuerfesten Schlitten (Alublech) gelegt und mit einer Geschwindigkeit von ungefähr 5 cm/s per Hand unter der Flamme durchgezogen. Erst nach etwa 5 cm der Beflammung der Schaumoberfläche wurde der Stoff von einer Rolle auf die Schaumoberfläche aufkaschiert.

Die Haftfestigkeit (Schälversuche) wurde gemäß DIN 53 357 gemessen, wobei eine Schälgeschwindigkeit von 50 mm/min gewählt wurde.

Die Ergebnisse sind in der nachfolgenden **Tabelle 1** gezeigt:

| **Polyol** | **Zusatzmittel** | | | **Haftung [N]** |
|---|---|---|---|---|
| | **Art** | **Mol.-Gew.** | **Konz. [%]** | |
| Basisrezeptur | ohne | - | - | 6-7 |
| | 1,4-Butandiol | 90 | 2 | 9 - 10 |
| | Dipropylenglykol | 135 | 2 | 8-9 |
| | Tripropylenglykol | 192 | 2 | 8 - 9 |
| | Polydiol* | 450 | 5 | 12 - 14 |
| | Polydiol* | 1070 | 5 | 8 - 10 |

| | | | | |
|---|---|---|---|---|
| * Propoxyliertes Propylenglykol (Lupranol®) Schaumdichte: 23 kg/m³ | | | | |

Die physikalischen Eigenschaften eines erfindungsgemäßen PUR-Polyetherblockschaumstoffes, der unter Verwendung von Lupranol® 1200 mit einem Molekulargewicht von 450 hergestellt worden war, wurden mit einem PUR-Polyetherblockschaumstoff, der ohne diesen Zusatz hergestellt worden war, verglichen. Die Ergebnisse, die in Tabelle 2 dargestellt sind, zeigen, daß durch den Zusatz von Diolen auch die physikalischen Eigenschaften wie Zugfestigkeit und Stauchhärte verbessert sind.

**Tabelle 2**

| **Polyol** | **Zusatzmittel** | | **Dichte [kg/m**^{**3**}**]** | **Zugfestigk. [kPa]** | **Dehnung [%]** | **Stauchhärte [kPa]** |
|---|---|---|---|---|---|---|
| | **Art** | **Konz. [%]** | | | | |
| Basisrezeptur | ohne | ohne | 23 | 85 | 170 | 3,2 |
| | Lu'nol 1200 | 5 | 23 | 120 | 150 | 3,5 |

Ferner wurde ein Vergleich zwischen einem erfindungsgemäß hergestellten PUR-Polyetherblockschaumstoff, der unter Verwendung von Lupranol® 1200 hergestellt wurde, und einem Blockschaumstoff gemäß des Standes der Technik, der mit einem Phosphitderivat, wie in Tabelle 3 angegeben, hergestellt worden war, bezüglich der Haftung durchgeführt. Die Ergebnisse sind in Tabelle 3 gezeigt.

**Tabelle 3**

| **Polyol** | **Zusatzmittel** | | **Haftung [%]** | **Verarbeitung** |
|---|---|---|---|---|
| | **Art** | **Konz. [%]** | | |
| Basisrezeptur | Polydiol (Lu'nol® 1200) | 5 | 12 - 14 | gut |
| | Phosphitderiv. Weston® 430 | 2 | 12 - 14 | gut |
| | Weston® PTP | 2 | 10 - 12 | zufriedenstellend |

Wie aus obiger Tabelle ersichtlich, sind die erfindungsgemäß hergestellten Blockschaumstoffe bezüglich der Haftungseigenschaften den unter Verwendung von Phosphitderivaten hergestellten Blockschaumstoffen gemäß des Standes der Technik gleichwertig bis überlegen und weisen darüber hinaus keine Probleme bezüglich des Entstehens von giftigen Verbindungen während des Flammkaschierens auf.

## Patentansprüche

1. Verwendung von aliphatischen Diolen der allgemeinen Formel (I)
HO ―(CH₂)ₙ ―OH (I)
wobei n eines ganze Zahl von 2 bis 18 sein kann,
oder von Polymerdiolen der allgemeinen Formel (II) 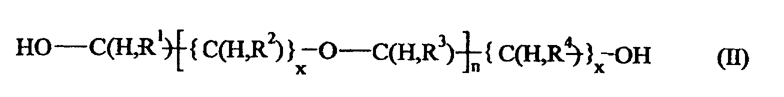 wobei
R¹, R², R³ und R⁴ jeweils unabhängig voneinander Wasserstoff, eine C₁₋₁₀-Akylgruppe oder eine C₁₋₁₀-Alkoxygruppe sein können,
x eine ganze Zahl von 1 bis 20 sein kann, und
n eine ganze Zahl von 1 bis 200 sein kann,
oder von Gemischen aus zwei oder mehr davon
in Polyurethan-Polyetherblockschaumstoffen zur Verbesserung der Flammkaschierbarkeit der Blockschaumstoffe.

2. Verwendung nach Anspruch 1 zur Verbesserung der Haftung des durch Flammkaschierung auf ein Substrat aufgebrachten Blockschaumstoffs auf dem Substrat.

3. Verwendung nach Anspruch 2, **dadurch gekennzeichnet, dass** das Substrat eine Schicht aus Textilmaterial, eine Kunststoff-Folie oder ein Papiervlies ist.

4. Verwendung nach einem der Ansprüche 1 bis 3, **dadurch gekennzeichnet, dass** das oder die Diole in einer Menge von 1 bis 10 Gew.-%, bezogen auf das Gesamtgewicht der Polyol-Komponente im Blockschaumstoff, zugesetzt werden.

5. Verwendung nach einem der vorstehenden Ansprüche; **dadurch gekennzeichnet, dass** das oder die Diole Polymerdiole der allgemeinen Formel (II), sind und ein Zahlenmittel des Molekulargewichts von 300 bis 1.500 aufweisen.

6. Verwendung nach einem der vorstehenden Ansprüche, **dadurch gekennzeichnet, dass** das oder die Polymerdiole ausgewählt sind aus Polyethylenglykol, Polyethylenglykolpropoxylat, Polypropylenglykol, Polypropylenglykolethoxylat oder Polypropylenglykolpropoxylat.

7. Verwendung nach einem der vorstehenden Ansprüche, **dadurch gekennzeichnet, dass** der Polyurethan-Polyetherblockschaumstoff unter Verwendung mindestens eines füllstoffhaltigen Polyols oder eines Gemisches aus mindestens einem füllstoffhaltigen Polyol und mindestens einem herkömmlichen Polyetherpolyol hergestellt wird.

8. Verwendung nach einem der vorstehenden Ansprüche zur Herstellung von Verbundstoffen.

9. Verbundstoff enthaltend als Matrix einen Polyether-Polyurethanblockschaumstoff, der unter Verwendung eines oder mehrerer Diole der allgemeinen Formel (I) und/oder (II) hergestellt wurde, und mindestens eine darauf aufgebrachte Schicht aus einem Textilmaterial, einer Kunststoff Folie oder einem Papiervlies.

10. Verbundstoff nach Anspruch 9, **dadurch gekennzeichnet, dass** das oder die Diole der allgemeinen Formel (I) und/oder (II) in einer Menge von 1-10 Gew.-%, bezogen auf das Gesamtgewicht der Polyol-Komponente im Blockschaum, eingesetzt werden.

11. Verfahren zur Herstellung eines Verbundstoffs gemäß Anspruch 9 oder 10, **dadurch gekennzeichnet, dass** der Polyether-Polyurethanblockschaumstoff als Matrix und die darauf aufgebrachte Schicht durch Flammkaschieren flächig verbunden werden.

## Claims

1. The use of aliphatic diols of the formula (I)
HO-(CH₂)ₙ-OH (I)
where n may be an integer from 2 to 18,
or of polymer diols of the formula (II)
HO-C(H,R¹)̵⁅⁅C(H,R²)̵)̵ₓO-C(H,R³)̵⁆ₙ+⁅C(H,R⁴⁆ₓOH (II)
where
R¹, R², R³ and R⁴, independently of one another, may each be hydrogen, C₁-C₁₀-alkyl or C₁-C₁₀-alkoxy,
x may be an integer from 1 to 20, and
n may be an integer from 1 to 200,
or of mixtures of two or more thereof,
in polyurethane/polyether block foams to improve the flame bondability of said block foams.

2. The use as claimed in claim 1 to improve the adhesion to a substrate of the block foam applied to the substrate by flame bonding.

3. The use as claimed in claim 2, wherein the substrate is a layer of textile material, a plastics film or a paper web.

4. The use as claimed in any one of claims 1 to 3, wherein the diol(s) are added in an amount of from 1 to 10% by weight, based on the total weight of the polyol component in the block foam.

5. The use as claimed in any one of the above claims, wherein the diol(s) are polymer diols of the formula (II) and have a number average molecular weight of from 300 to 1,500.

6. The use as claimed in any one of the above claims, wherein the polymer diol(s) are selected from polyethylene glycol, polyethylene glycol propoxylate, polypropylene glycol, polypropylene glycol ethoxylate and polypropylene glycol propoxylate.

7. The use as claimed in any one of the above claims, wherein the polyurethane/polyether block foam is prepared using at least one filler-containing polyol or a mixture of at least one filler-containing polyol and at least one conventional polyetherpolyol.

8. The use as claimed in any one of the above claims for the production of composite materials.

9. A composite material containing, as a matrix, a polyether/polyurethane block foam which was prepared using one or more diols of the formula (I) and/or (II), and at least one layer applied thereon and comprising a textile material, a plastics film or a paper web.

10. A composite material as claimed in claim 9, wherein the diol(s) of the formula (I) and/or (II) are used in an amount of from 1 to 10% by weight, based on the total weight of the polyol component in the block foam.

11. A process for the production of a composite material as claimed in claim 9 or 10, wherein the polyether/polyurethane block foam, as the matrix, and the layer applied thereon are bonded over an extensive area by flame bonding.

## Revendications

1. Utilisation de diols aliphatiques de formule générale (I)
HO―(CH₂)ₙ―OH (I)
dans laquelle n peut être un nombre entier de 2 à 18, ou de diols polymères de formule générale (II)
HO―C(H,R¹)[{C(H,R²)}ₓ―O―C(H,R³)]ₙ―C(H,R⁴)ₓ―OH (II)
dans laquelle
R¹, R², R³ et R⁴ peuvent représenter indépendamment l'un de l'autre un atome d'hydrogène, un groupe alkyle en Ci à C₁₀, ou un groupe alcoxy en C₁ à C₁₀,
x peut être un nombre entier de 1 à 20, et
n peut être un nombre entier de 1 à 200,
ou de mélanges de deux ou plusieurs d'entre eux
dans des produits mousse en bloc à base de polyuréthane-polyéther pour améliorer l'aptitude au doublage à la flamme des produits mousse en bloc.

2. Utilisation selon la revendication 1 pour améliorer l'adhérence du produit mousse en bloc appliqué sur un substrat par doublage à la flamme, au substrat.

3. Utilisation selon la revendication 2, **caractérisée en ce que** le substrat est une couche de matière textile, une feuille de matière plastique ou un non tissé en papier.

4. Utilisation selon l'une quelconque des revendications 1 à 3, **caractérisée en ce que** le ou les diols sont ajoutés en une quantité de 1 à 10% en poids par rapport au poids total des composants polyol dans le produit mousse en bloc.

5. Utilisation selon l'une quelconque des revendications précédentes, **caractérisée en ce que** le ou les diols sont des diols polymères de formule générale (II) et présentent une masse moléculaire moyenne en nombre de 300 à 1 500.

6. Utilisation selon l'une quelconque des revendications précédentes, **caractérisée en ce que** le ou les diols polymères sont choisis parmi le polyéthylèneglycol, le propoxylate de polyéthylèneglycol, le polypropylèneglycol, l'éthoxylate de polypropylèneglycol ou le propoxylate de polypropylèneglycol.

7. Utilisation selon l'une quelconque des revendications précédentes, **caractérisée en ce que** le produit mousse en bloc à base de polyuréthane-polyéther est préparé en employant au moins un polyol contenant une charge ou un mélange d'au moins un polyol contenant une charge et d'au moins un polyétherpolyol classique.

8. Utilisation selon l'une quelconque des revendications précédentes, pour la préparation de composites.

9. Composite contenant en tant que matrice un produit mousse en bloc à base de polyéther-polyuréthane qui a été préparé en employant un ou plusieurs diols de formule générale (I) et/ou (II) et au moins une couche appliquée sur celui-ci constituée d'une matière textile, d'une feuille de matière plastique ou d'un non tissé de papier.

10. Composite selon la revendication 9, **caractérisé en ce que** le ou les diols de formule générale (I) et/ou (II) sont mis en oeuvre en une quantité de 1 à 10% en poids par rapport au poids total des composants polyol dans le produit mousse en bloc.

11. Procédé de préparation d'un composite selon la revendication 9 ou 10, **caractérisé en ce que** le produit mousse en bloc à base de polyéther-polyuréthane en tant que matrice et la couche appliquée sur celui-ci par doublage à la flamme sont liés en nappe.
